# EUROPEAN PATENT APPLICATION

(11) **EP 4 800 901 A1**
(43) Date of publication of application: **02.09.2026**
(21) Application number: 23956677.1
(22) Date of filing: 20.12.2023
(51) Int. Cl.: H02M 1/32, H02M 7/219

(54) **ENERGY SELF-BALANCING FLEXIBLE DIRECT-CURRENT CONVERTER VALVE, CONTROL METHOD, AND DIRECT-CURRENT SYSTEM**

(30) Priority: 25.10.2023 CN 202311395835; 31.10.2023 CN 202311438766
(71) Applicant: Electric Power Research Institute, China Southern Power Grid, Guangzhou, Guangdong 510663 (CN)
(72) Inventor: ZHOU, Yuebin, Guangzhou, Guangdong 510663 (CN); CAI, Xipeng, Guangzhou, Guangdong 510663 (CN); YUAN, Zhiyong, Guangzhou, Guangdong 510663 (CN); CAO, Wanyu, Guangzhou, Guangdong 510663 (CN); RAO, Hong, Guangzhou, Guangdong 510663 (CN); LI, Yan, Guangzhou, Guangdong 510663 (CN); XU, Shukai, Guangzhou, Guangdong 510663 (CN); YANG, Liu, Guangzhou, Guangdong 510663 (CN); XU, Yiliang, Guangzhou, Guangdong 510663 (CN)
(74) Representative: Schmid, Nils T.F.
(86) International application number: PCT/CN2023/140072
(87) International publication number: WO 2025/086441

(57) **Abstract**

An energy self-balancing flexible direct-current converter valve, a control method, and a direct-current system, which relate to the technical field of power transmission and distribution networks. The converter valve comprises three phase units, and each phase unit comprises an upper leg and a lower leg. The upper legs and the lower legs each comprise a plurality of full-bridge energy self-balancing submodules and a plurality of half-bridge energy self-balancing submodules. Each of the full/half-bridge energy self-balancing submodules is an optimized MMC submodule comprising an energy self-balancing circuit. The energy self-balancing circuit is composed of a power electronic switch and an energy dissipation resistor connected in series, and is used for dissipating surplus energy when an overvoltage early warning occurs for the capacitor voltage of the submodule. The present application, without affecting the operational logic of conventional converter valves and at low costs, can solve the technical problem of surplus power not being dissipated promptly due to faults occurring in a direct-current power transmission system in a new energy islanded ultra-long-distance direct-current delivery scenario. Meanwhile, temporary energy stored in the capacitors of the optimized MMC submodules can be fully utilized, reducing the waste generated by surplus power dissipated as heat.

## Description

The present application claims the priority to Chinese patent application No. 202311395835.7, titled "ENERGY SELF-BALANCING FLEXIBLE DIRECT-CURRENT CONVERTER VALVE, CONTROL METHOD, AND DIRECT-CURRENT SYSTEM", filed on October 25, 2023 with the China National Intellectual Property Administration and Chinese patent application No. 202311438766.3, titled "ENERGY SELF-BALANCING FLEXIBLE DIRECT-CURRENT CONVERTER VALVE, CONTROL METHOD, AND DIRECT-CURRENT SYSTEM", filed on October 31, 2023 with the China National Intellectual Property Administration, both of which are incorporated herein by reference in their entireties.

### FIELD

The present disclosure relates to the technical field of transmission and distribution networks, and in particular to an energy self-balancing flexible direct-current converter valve and a control method therefor.

### BACKGROUND

Against the backdrop of a global energy transition, a large-scale of renewable energy systems are connected to the power grid. Most renewable energy bases are constructed in remote areas with low load levels and weak grid structures, leading to a prominent demand for stable renewable energy islanded delivery. Flexible direct-current power transmission based on modular multilevel converters (MMC) has emerged as one of key methods for delivering renewable energy, owing to flexibility, controllability, and high efficiency. When flexible direct-current power transmission is applied to connect an islanded power generation system and a receiving-end alternating-current grid, a fault occurring on the receiving-end alternating-current grid may prevent power delivery. If the power generation system at a sending end is not disconnected, a direct-current system may accumulate a large amount of surplus power, resulting in severe overvoltage conditions that threaten safe operation of the direct-current system.

In the related art, two main approaches are employed to dissipate a large amount of surplus power. The first approach deploys a direct-current energy-consuming apparatus on a direct-current side of a receiving-end converter station, which dissipates the excess power during faults, thereby allowing fault ride-through without disconnecting the islanded power generation system at the sending end. However, the direct-current energy-consuming apparatus in this approach features a complex structure, involves a large number of controllable power devices, incurs high costs, and requires additional installation space. The second approach is to install an alternating-current energy-consuming apparatus in an alternating-current line of a sending-end converter station. This approach has a simple topology and low cost. However, since the alternating-current energy-consuming apparatus is installed at the sending end, when a fault occurs at the receiving end, it is necessary to rely on communication or similar means to notify the sending end to activate the energy-consuming apparatus. For ultra-long-distance power transmission systems, during the fault period, a large amount of surplus power may continue to flow into the flexible direct-current converter valve due to a relatively long communication delay. If the alternating-current energy-consuming apparatus at the sending end fails to be activated in time, resulting in overvoltage lockout of the direct-current power transmission system.

### SUMMARY

An energy self-balancing flexible direct-current converter valve and a control method therefor are provided in the present disclosure, so as to address the technical issue in the prior art where either the system structure is overly complex and costly, or the energy-consumption response time is too long, easily resulting in overvoltage, thus failing to economically and reliably address the technical issues of a system for renewable energy islanded ultra-long-distance direct-current delivery.

In view of this, an energy self-balancing flexible direct-current converter valve is provided according to a first aspect of the present disclosure. The energy self-balancing flexible direct-current converter valve includes: three phase units, where each of the three phase units includes an upper bridge arm and a lower bridge arm; where
the upper bridge arm and the lower bridge arm each include multiple full-bridge energy self-balancing sub-modules, multiple half-bridge energy self-balancing sub-modules and a bridge arm reactor;
both the multiple full-bridge energy self-balancing sub-modules, the multiple half-bridge energy self-balancing sub-modules and the bridge arm reactor are connected in series;
each of the full-bridge energy self-balancing sub-modules is an optimized MMC sub-module, each of the half-bridge energy self-balancing sub-modules is an optimized MMC sub-module, and the optimized MMC sub-modules each comprise an energy self-balancing circuit; and
the energy self-balancing circuit includes a power electronic switch and a discharge resistor connected in series, and is configured to dissipate surplus energy in response to a fault in a direct-current power transmission system causing an overvoltage risk of a capacitor of the optimized MMC sub-module.

In an embodiment, two terminals of the energy self-balancing circuit are connected to a positive electrode and a negative electrode of the capacitor of the optimized MMC sub-module, respectively, and the optimized MMC sub-module is the full-bridge energy self-balancing sub-module or the half-bridge energy self-balancing sub-module.

In an embodiment, a terminal of the upper bridge arm is connected to a positive electrode of a direct-current side of the converter valve, and another terminal of the upper bridge arm is connected to an alternating-current side of the converter valve; and a terminal of the lower bridge arm is connected to a negative electrode of the direct-current side of the converter valve, and another terminal of the lower bridge arm is connected to the alternating-current side of the converter valve.

A control method for an energy self-balancing flexible direct-current converter valve is provided according to a second aspect of the present disclosure. The control method is applied to the flexible direct-current converter valve according to any one of the first aspect, and the control method includes:
monitoring, in a real time manner, a voltage of the capacitor in the optimized MMC sub-module;
turning on the power electronic switch in the energy self-balancing circuit to dissipate surplus energy, in response to the voltage of the capacitor being higher than a turn-on threshold;
turning off the power electronic switch in the energy self-balancing circuit to terminate dissipating the surplus energy, in response to the voltage of the capacitor being lower than a turn-off threshold;
triggering an alternating-current energy-consuming apparatus at a sending end of the direct-current power transmission system to assist in energy consumption, in response to a total energy dissipated by the discharge resistor of the energy self-balancing circuit being greater than a discharge threshold of the discharge resistor; and
turning off the power electronic switch in the energy self-balancing circuit to terminate dissipating the surplus energy, and prohibiting turn-on of the power electronic switch until a temperature of the discharge resistor equilibrates with an ambient temperature, in response to the total energy dissipated by the discharge resistor of the energy self-balancing circuit being greater than a maximum tolerated energy of the discharge resistor.

In an embodiment, the turn-on threshold is expressed by: ${U}_{turn - on} = \left(1-k\right) ⋅ {U}_{cut} ,$ where *Uₜᵤᵣₙ₋ₒₙ* represents the turn-on threshold, *k* represents a first margin with a typical value range of 10% to 20%, and U*_{cut}* represents a sub-module lockout voltage.

In an embodiment, the turn-off threshold is expressed by: ${U}_{turn - off} = \left(1-m\right) ⋅ {U}_{turn - on} ,$ where *U_{turn-off}* represents the turn-off threshold, and *m* represents a second margin with a typical value range of 5% to 10%.

In an embodiment, the total energy dissipated by the discharge resistor is less than or equal to the maximum tolerated energy of the discharge resistor, and the maximum tolerated energy of the discharge resistor is expressed by: $\frac{{\left[\left({U}_{turn - on}+{U}_{turn - off}\right)/2\right]}^{2}}{R} ⋅ n ⋅ ΔT \leq {E}_{R} ,$ where R represents a resistance value of the discharge resistor, *E_{R}* represents the maximum tolerated energy of the discharge resistor, ΔT represents a duration of a single alternating-current fault, and *n* represents a turn-on duty cycle of the discharge resistor.

In an embodiment, the discharge threshold of the discharge resistor is expressed by: ${E}_{dischch arg e - thrshold} \leq {E}_{R} - \frac{{\left[\left({U}_{turn - on}+{U}_{turn - off}\right)/2\right]}^{2}}{R} ⋅ n ⋅ \left({t}_{1}+{t}_{2}\right) ,$ where *E*_{*dischch*arge*-thrshold*} represents the discharge threshold of the discharge resistor, *t*₁ represents a communication duration from the sending end to a receiving end of the direct-current power transmission system, and *t*₂ represents an enabling delay of the alternating-current energy-consuming apparatus at the sending end.

A direct-current system is provided according to a third aspect of the present disclosure. The direct-current system includes: a renewable energy field station, a flexible direct-current converter station at a sending end, a flexible direct-current converter station at a receiving end, and an alternating-current energy-consuming apparatus; where
each of the flexible direct-current converter station at the sending end and the flexible direct-current converter station at the receiving end is provided with the energy self-balancing flexible direct-current converter valve according to the first aspect;
the renewable energy field station is connected to the flexible direct-current converter station at the sending end via a three-phase alternating-current bus;
the flexible direct-current converter station at the sending end is connected to the flexible direct-current converter station at the receiving end through a direct-current line; and
the alternating-current energy-consuming apparatus is connected between the renewable energy field station and the flexible direct-current converter station at the sending end, and configured to assist in surplus energy consumption in response to a total energy dissipated by the discharge resistor in the energy self-balancing flexible discharge resistor converter valve being greater than a discharge threshold of the discharge resistor.

It can be seen from the above technical solutions that the embodiments of the present disclosure have the following advantages.

Compared with the two existing technical approaches of using direct-current energy-consuming apparatus and alternating-current energy-consuming apparatus to balance surplus energy, the direct-current energy-consuming apparatus widely adopted in current engineering practices is eliminated in the present disclosure, for achieving the same fault ride-through capability, engineering costs are significantly reduced, and converter station footprint is saved, thereby improving economic performance and offering greater cost advantages. Meanwhile, in scenarios involving large-scale renewable energy islanded ultra-long-distance direct-current delivery, the issue that the alternating-current energy-consuming apparatus at the sending end fails to dissipate surplus energy in a timely manner in the event of the alternating-current fault at the receiving end, which may result in system overvoltage is addressed. Through active control by the energy self-balancing circuit, surplus power within modules can be promptly released, thereby preventing capacitor overvoltage in sub-modules caused by power surplus and ensuring the safety and reliability of the system.

In the design of the energy self-balancing flexible direct-current converter valve according to the present disclosure, an energy self-balancing circuit is provided in each optimized MMC sub-module, ensuring that the capacitors in each sub-module are similar in charge and discharge frequencies during voltage equalization sorting. The surplus energy of the system can be collectively dissipated by the discharge resistors across all the energy self-balancing modules. Therefore, a discharge resistor with a small size can meet requirements for energy dissipation, reducing the impact on an original size and layout of the sub-modules.

The energy self-balancing control method proposed in the present disclosure stores surplus power in the capacitors of optimized MMC sub-modules within the flexible direct-current converter station when the direct-current system has surplus power. Once a voltage of a capacitor of a sub-module rises to the turn-on threshold, the surplus power is then dissipated through the discharge resistors in the energy self-balancing circuit. This approach fully utilizes the energy margin of the capacitors of the optimized MMC sub-module to recover surplus power from the system, thereby reducing waste caused by directly dissipating the surplus power as heat through the discharge resistors.

Based on the fault ride-through method for a system for renewable energy islanded ultra-long-distance direct-current delivery according to the present disclosure, the energy self-balancing flexible direct-current converter valve only dissipates the surplus power after a voltage of a capacitor of the sub-modules reaches the turn-on threshold. Meanwhile, in scenarios where a fault duration is relatively long, when the total energy dissipated by the single discharge resistor reaches the maximum tolerated energy of the discharge resistor, the alternating-current energy-consuming apparatus at the sending end is engaged. As a result, the resistance value of the discharge resistor in an energy self-balancing path can be further reduced, thereby reducing a size of the resistor and impact on an original layout and water-cooling design of the flexible direct-current converter valve.

Based on the system for renewable energy islanded ultra-long-distance direct-current delivery and the fault ride-through method according to the present disclosure, the issue of over-voltage of a capacitor of a full-bridge module during the direct-current fault of the system is addressed, a proportion of the full-bridge module in a full-half bridge hybrid flexible direct-current converter valve is reduced, thereby further reducing the cost of the device.

### BRIEF DESCRIPTION OF THE DRAWINGS

FIG. 1 is a schematic structural diagram of an energy self-balancing flexible direct-current converter valve according to an embodiment of the present disclosure;
FIG. 2 shows a flowchart of a control method for an energy self-balancing flexible direct-current converter valve according to an embodiment of the present disclosure; and
FIG. 3 shows a schematic structural diagram of a direct-current system in which an alternating-current energy-consuming apparatus is arranged at a sending end according to an embodiment of the present disclosure.

### DETAILED DESCRIPTION

In order to enable those skilled in the art to better understand the solutions of the present disclosure, the technical solutions of the embodiments of the present disclosure are described clearly and completely below in conjunction with the drawings of the embodiments of the present disclosure. Apparently, the embodiments described below are only some, rather than all of the embodiments of the present disclosure. Based on the embodiments of the present disclosure, all other embodiments obtained by those skilled in the art without any creative work fall into the protection scope of the present disclosure.

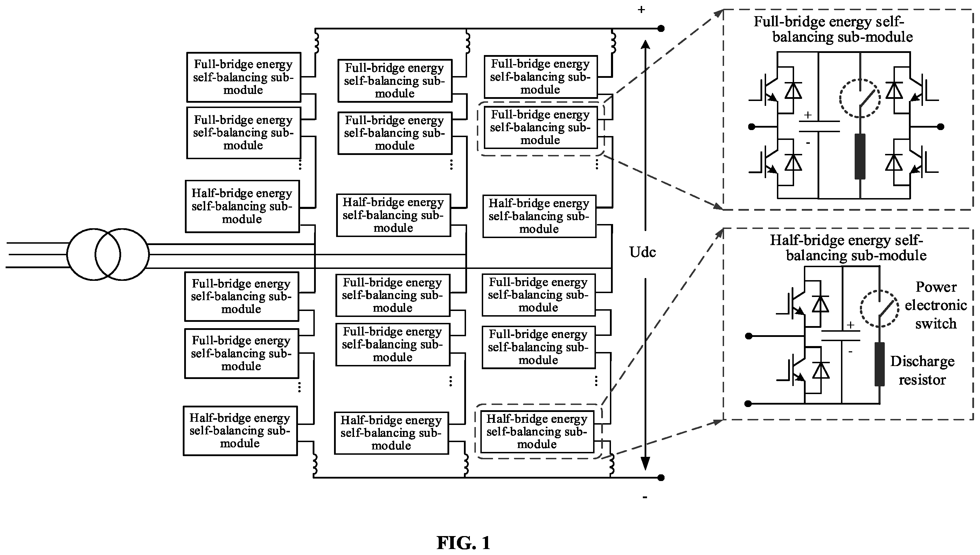

For ease of understanding, reference is made to FIG. 1. An energy self-balancing flexible direct-current converter valve according to an embodiment of the present disclosure includes: three phase units, where each of the three phase units includes an upper bridge arm and a lower bridge arm.

The upper bridge arm and the lower bridge arm each include multiple full-bridge energy self-balancing sub-modules, multiple half-bridge energy self-balancing sub-modules and a bridge arm reactor.

Both the multiple full-bridge energy self-balancing sub-modules and the multiple half-bridge energy self-balancing sub-modules are connected in series with the arm reactor.

The full-bridge energy self-balancing sub-modules and the half-bridge energy self-balancing sub-modules are optimized MMC sub-modules, each of the optimized MMC sub-modules includes an energy self-balancing circuit. The energy self-balancing circuit includes a power electronic switch and a discharge resistor connected in series, and is configured to dissipate surplus energy in response to a fault in a direct-current power transmission system causing an overvoltage risk of a capacitor of the optimized MMC sub-module.

It should be noted that the full-bridge energy self-balancing sub-modules, the half-bridge energy self-balancing sub-modules and the bridge arm reactor on the bridge arm are connected in series. The energy self-balancing circuit connects the discharge resistor to the system or disconnect the discharge resistor from the system by means of closing and opening of the circuit. Surplus energy is dissipated through the discharge resistor when the discharge resistor is connected to the system, thereby handling a surplus power failure of the system. In addition, the full-bridge energy self-balancing sub-module and the half-bridge energy self-balancing sub-module in the embodiment are both optimized MMC sub-modules, and the optimized MMC sub-module is obtained by adding an energy self-balancing circuit to a conventional MMC sub-module structure. Since each optimized MMC sub-module includes the energy self-balancing circuit, a sufficient number of discharge resistors are available to collectively share the energy dissipation, thereby meeting the requirements of the system.

Furthermore, two terminals of the energy self-balancing circuit are connected to a positive electrode and a negative electrode of the capacitor of the optimized MMC sub-module, respectively, and the MMC sub-module is the full-bridge energy self-balancing sub-module or the half-bridge energy self-balancing sub-module.

Furthermore, a terminal of the upper bridge arm is connected to a positive electrode of a direct-current side of the converter valve, and another terminal of the upper bridge arm is connected to an alternating-current side of the converter valve; and a terminal of the lower bridge arm is connected to a negative electrode of the direct-current side of the converter valve, and another terminal of the lower bridge arm is connected to the alternating-current side of the converter valve.

It should be noted that a voltage of the capacitor in the optimized MMC sub-module reflects an operating status of the system, that is, the voltage can be used to analyze whether the system has a fault, and an operation is made in response to an analysis result of the fault. The energy self-balancing circuit is connected to two terminals of the capacitor in the optimized MMC sub-module, which facilitates turning on the power electronic switch in the energy self-balancing circuit when the voltage of the capacitor is higher than a turn-on threshold, thereby connecting the discharge resistor to the system to dissipate the surplus power. It should be understood that one terminal of each of the upper bridge arms of the three phase units is connected to the positive electrode of the direct-current side of the converter valve, and one terminal of each of the lower bridge arms of the three phase units is connected to the negative electrode of the direct-current side of the converter valve. Moreover, in this embodiment, the optimized MMC sub-modules are either full-bridge energy self-balancing sub-modules or half-bridge energy self-balancing sub-modules. Each sub-module may individually acquire a voltage of its own capacitor, perform fault analysis based on the voltage, and then perform an operation in response to a result of the fault analysis.

In the energy self-balancing flexible direct-current converter valve according to the embodiment of the present disclosure, each phase unit includes two bridge arms, each bridge arm includes multiple full-bridge energy self-balancing sub-modules and half-bridge energy self-balancing sub-modules. Each sub-module is provided with an energy self-balancing circuit. The energy self-balancing circuit includes a power electronic switch and a discharge resistor that are capable of dissipating surplus energy in the event of a fault in the power transmission system. The discharge resistors in all sub-modules can collectively share the surplus energy dissipation, thereby addressing the practical issue of surplus power dissipation. Moreover, the involved device has a simple and regular structure, is easy to configure and implement, and thus is of value in practical application. Therefore, in the embodiment of the present disclosure, the technical issues in the prior art where existing solutions are either structurally complex and costly, or have excessively long energy dissipation response times that easily cause overvoltage, thus failing to economically and reliably address the technical issues of the system for renewable energy islanded ultra-long-distance direct-current delivery.

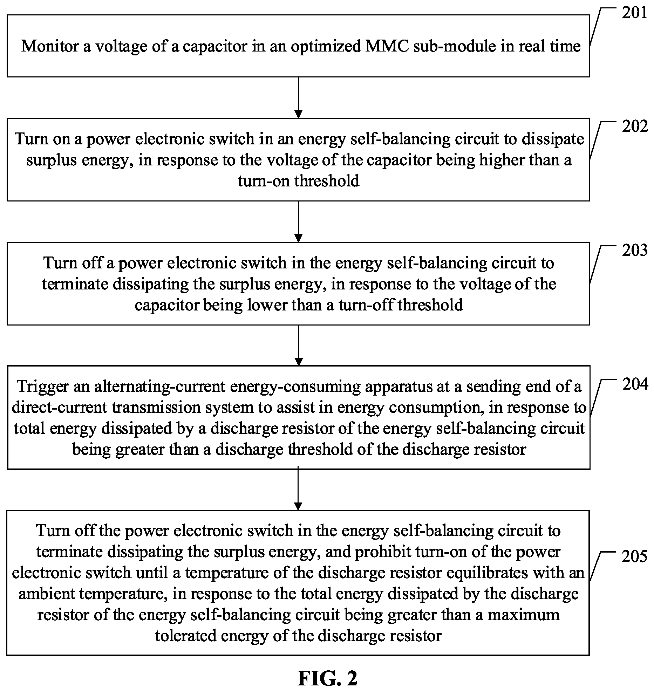

For ease of understanding, reference is made to FIG. 2. A control method for an energy self-balancing flexible direct-current converter valve is provided according to an embodiment of the present disclosure, and the control method includes steps 201 to 205.

In step 201, a voltage of a capacitor in an optimized MMC sub-module is monitored in a real time manner.

In step 202, a power electronic switch in an energy self-balancing circuit is turned on to dissipate surplus energy, in response to the voltage of the capacitor being higher than a turn-on threshold.

In step 203, the power electronic switch in the energy self-balancing circuit is turned off to terminate dissipating the surplus energy, in response to the voltage of the capacitor being lower than a turn-off threshold.

In step 204, an alternating-current energy-consuming apparatus at a sending end of a direct-current power transmission system is triggered to assist in energy consumption, in response to a total energy dissipated by a discharge resistor of the energy self-balancing circuit being greater than a discharge threshold of the discharge resistor.

In step 205, the power electronic switch in the energy self-balancing circuit is turned off to terminate dissipating the surplus energy, and further turn-on of the power electronic switch is prohibited until a temperature of the discharge resistor equilibrates with an ambient temperature, in response to the total energy dissipated by the discharge resistor of the energy self-balancing circuit being greater than a maximum tolerated energy of the discharge resistor.

It should be noted that the process is intended for the control method for the energy self-balancing flexible direct-current converter valve in the foregoing embodiment. The executing subject is not limited, as long as the executing subject is capable of implementing control over the energy self-balancing flexible direct-current converter valve based on the method, such as a computer or other devices. Moreover, in this embodiment, the optimized MMC sub-module is either a full-bridge energy self-balancing sub-module or a half-bridge energy self-balancing sub-module. Each sub-module may individually acquire a voltage of its own capacitor, perform threshold determination, and then perform an operation in response to a result of the threshold determination. In addition, the discharge threshold may be set according to the actual situation and is not limited herein.

Further, a configuration process of the turn-on threshold is: ${U}_{turn - on} = \left(1-k\right) ⋅ {U}_{cut} ,$ where, *Uₜᵤᵣₙ₋ₒₙ* represents the turn-on threshold, *k* represents a first margin with a typical value range of 10% to 20%, and U*_{cut}* represents a sub-module lockout voltage.

Further, a configuration process of the turn-off threshold is: ${U}_{turn - off} = \left(1-m\right) ⋅ {U}_{turn - on} ,$ where U*_{turn-off}* represents the turn-off threshold, and *m* represents a second margin with a typical value range of 5% to10%.

Further, the total energy dissipated by a single discharge resistor is less than or equal to the maximum tolerated energy of the single discharge resistor, and a configuration process of the maximum tolerated energy of the discharge resistor is: $\frac{{\left[\left({U}_{turn - on}+{U}_{turn - off}\right)/2\right]}^{2}}{R} ⋅ n ⋅ ΔT \leq {E}_{R} ,$ where R represents a resistance value of the discharge resistor, *E_{R}* represents the maximum tolerated energy of the discharge resistor, ΔT represents a duration of a single alternating-current fault, and *n* represents a turn-on duty cycle of the discharge resistor.

In the process of selecting the discharge resistor, the above-mentioned selection constraints must be satisfied, rather than configuring them arbitrarily.

Further, a configuration process of the discharge threshold of the discharge resistor is: ${E}_{disch arg e - threshold} \leq {E}_{R} - \frac{{\left[\left({U}_{turn - on}+{U}_{turn - off}\right)/2\right]}^{2}}{R} ⋅ n ⋅ \left({t}_{1}+{t}_{2}\right) ,$ where *E_{discharge-threshold}* represents the discharge threshold of the discharge resistor, *t*₁ represents a communication duration from the sending end to a receiving end of the direct-current power transmission system, and *t*₂ represents an enabling delay of the alternating-current energy-consuming apparatus at the sending end.

It should be noted that, by adopting the above control method, when a fault occurs in the direct-current system resulting in an energy imbalance between the sending end and the receiving end and thereby causing surplus power in the system, the surplus power is first stored in the capacitors of the optimized MMC sub-modules of the energy self-balancing converter valve. In this case, the voltage of the capacitor of each sub-module continues to rise, the surplus power is dissipated through the discharge resistors in the energy self-balancing circuit when the voltage reaches the maximum voltage limit U*ₜᵤᵣₙ₋ₒₙ* of the capacitor. This method fully utilizes the energy margin of the capacitors in the optimized MMC sub-modules to recover the surplus power in the system, thereby reducing the waste caused by directly dissipating the surplus power in the form of heat through the discharge resistors.

When the monitored voltage is higher than the turn-on threshold, the power electronic switch may be turned on, thereby dissipating the surplus energy through the discharge resistor. Once the monitored voltage decreases to the turn-off threshold, the power electronic switch is turned off, thereby terminating the surplus energy dissipation.

However, if during the fault period, the total energy dissipated by the discharge resistor reaches its own discharge threshold, it indicates that the receiving end is unable to dissipate the surplus energy through its own devices. In such case, the sending end is notified to engage a specific energy-consuming apparatus to assist in energy dissipation. The discharge threshold is a value set based on the maximum tolerated energy of the device, such as energy withstand capacity. This discharge threshold may be determined based on the communication duration from the sending end to the receiving end of the direct-current power transmission system and the total energy dissipated by the discharge resistor during the enabling delay of the alternating-current energy-consuming apparatus at the sending-end.

When the total energy dissipated by the discharge resistor is greater than the maximum tolerated energy of the discharge resistor, the power electronic switch in the energy self-balancing circuit is turned off to terminate dissipating the surplus energy, and turn-on of the power electronic switch is prohibited until the temperature of the discharge resistor equilibrates with the ambient temperature.

From above, during the monitoring and surplus energy dissipation process, the turn-on threshold, turn-off threshold, and discharge threshold are involved. Each of these thresholds is adaptively configured and satisfies certain value conditions.

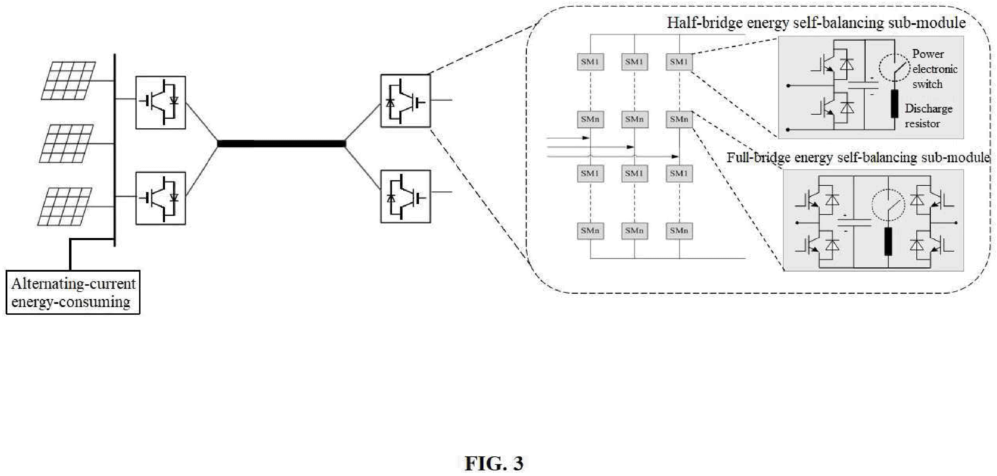

A detailed energy self-balancing control scheme is described as follows. The voltage *U_{c}* of the capacitor of each sub-module in the converter valve is monitored in a real time manner. When the converter valve operates normally, the power electronic switches in the energy self-balancing circuit remain in an off state, and the converter valve functions only to exchange energy. When a fault occurs in the system, due to the inability of power generated by the renewable energy to change promptly, an imbalance of the power transmission between the sending-end and receiving-end arises. To reduce the waste caused by dissipating surplus power as heat, the surplus power of the direct-current system is preferentially recovered by the capacitors of the full-bridge or half-bridge energy self-balancing sub-modules in the converter valve, during which the voltage of the capacitors continues to rise. When the monitored voltage of the capacitors of the sub-modules rises above the turn-on threshold, the power electronic switch in the energy self-balancing circuit is turned on, the surplus power is dissipated by the discharge resistor in the energy self-balancing circuit. The voltage of the capacitors of the sub-modules gradually decreases, and when it is detected that the voltage of the capacitors decreases to the turn-off threshold, the switch in the energy self-balancing circuit is turned off. During a closing period of the discharge circuit, if the discharge resistor reaches the discharge threshold of the tolerated energy of the discharge resistor, the alternating-current energy-consuming apparatus at the sending-end is engaged, as shown in FIG. 3. This alternating-current energy-consuming apparatus remains in operation until the fault is cleared, and then is gradually withdrawn from alternating-current energy dissipation. The naming of the sub-modules in FIG. 3 is consistent with the explanations provided above and corresponds to the defined names in the present embodiment in one-to-one correspondence, and thus is not repeated here.

For ease of understanding, a direct-current system is provided according to an embodiment of the present disclosure. The direct-current system includes: a renewable energy field station, a flexible direct-current converter station at a sending end, a flexible direct-current converter station at a receiving end, and an alternating-current energy-consuming apparatus.

Each of the flexible direct-current converter station at the sending end and the flexible direct-current converter station at the receiving end is provided with the energy self-balancing flexible direct-current converter valve according to any one of the embodiments described above.

The renewable energy field station is connected to the flexible direct-current converter station at the sending end via a three-phase alternating-current bus.

The flexible direct-current converter station at the sending end is connected to the flexible direct-current converter station at the receiving end through a direct-current line.

The alternating-current energy-consuming apparatus is connected between the renewable energy field station and the flexible direct-current converter station at the sending end, and configured to assist in surplus energy consumption, in response to a total energy dissipated by the discharge resistor in the energy self-balancing flexible discharge resistor converter valve being greater than a discharge threshold of the discharge resistor.

It should be noted that when an alternating-current fault or a direct-current fault occurs at the receiving end of the system, the surplus power may first be dissipated through energy self-balancing flexible direct-current converter valves configured in flexible direct-current converter stations. However, if the total energy dissipated by the discharge resistors in the flexible direct-current converter valves during the fault reaches their own discharge threshold, it is required to notify the sending end of the direct-current system to activate the alternating-current energy-consuming apparatus into the system. The alternating-current energy-consuming apparatus remains in operation until the fault is cleared and then is gradually withdrawn from alternating-current energy dissipation.

The system provided in this embodiment addresses the issue where, in the event of the alternating-current fault at the receiving end, the alternating-current energy-consuming apparatus at the sending end fails to dissipate the surplus energy in time, resulting in system overvoltage. Through active control by the energy self-balancing circuit, the surplus power stored in the sub-modules is promptly released, thereby preventing capacitor overvoltage in sub-modules caused by power surplus and ensuring the safety and reliability of the system. Moreover, the flexible direct-current converter valve only dissipates the surplus power after the capacitor voltage of the sub-modules is higher than a warning threshold, that is, the turn-on threshold. In scenarios where the fault duration is relatively long, once the discharge resistor reaches the discharge threshold of tolerated energy of the discharge resistor, the alternating-current energy-consuming apparatus at the sending end is engaged. As a result, the resistance value of the discharge resistor in the flexible direct-current converter valve can be further reduced, thereby reducing a size of the resistor and impact on an original layout and water-cooling design of the flexible direct-current converter valve.

In the embodiments provided by the present disclosure, it should be understood that the disclosed system, device, and method may be implemented in other ways. For example, the embodiments of the apparatus described above are only schematic. For example, the division of the units is only a logical functional division, and there may be other division methods in actual implementation. For example, multiple units or components may be combined or integrated into another system, or some features may be ignored or not be executed. In addition, the couplings or direct couplings or communication connections shown or discussed may be indirect couplings or communication connections through some interfaces, apparatuses or units, and may be in electrical, mechanical or in other forms.

The unit described as a separate component may be or may be not separated physically. The component displayed as a unit may be or may be not a physical unit, that is, may be located at one place or may be distributed on multiple network units. Some or all of the units may be selected according to actual needs to achieve the objectives of the solutions of the embodiments.

In addition, the functional units in the embodiments of the present disclosure may be integrated into one processing unit, or each of the units may exist alone physically, or two or more of the units may be integrated into one unit. The above integrated units may be implemented in a form of hardware or software functional units.

In a case that the integrated unit is implemented in the form of software function unit and is sold or used as a separate product, it can also be stored in a computer readable storage medium. Based on such an understanding, the technical solutions of the present disclosure essentially, or the part contributing to the conventional technology, or all or a part of the technical solutions may be implemented in the form of a software product. The computer software product is stored in a storage medium and includes various instructions for instructing a computer device (which may be a personal computer, a server or a network device) to perform all or some of the steps of the method described in the embodiments of the present disclosure. The foregoing storage medium includes various media that can store program codes such as a USB disk, a mobile hard disk, a Read-Only Memory (ROM), a Random Access Memory (RAM), a magnetic disk, or an optical disk.

The foregoing embodiments are used for describing, instead of limiting the technical solutions of the present disclosure. Those skilled in the art shall understand that although the present disclosure has been described in detail with reference to the foregoing embodiments, modifications can be made to the technical solutions described in the foregoing embodiments, or equivalent replacements may be made to some technical features in the technical solutions, provided that such modifications or replacements do not cause the essence of corresponding technical solutions to depart from the spirit and scope of the technical solutions of the embodiments of the present disclosure.

## Claims

1. An energy self-balancing flexible direct-current converter valve, comprising: three phase units, wherein each of the three phase units comprises an upper bridge arm and a lower bridge arm, wherein
the upper bridge arm and the lower bridge arm each comprise a plurality of full-bridge energy self-balancing sub-modules, a plurality of half-bridge energy self-balancing sub-modules and a bridge arm reactor, and the plurality of full-bridge energy self-balancing sub-modules, the plurality of half-bridge energy self-balancing sub-modules and the bridge arm reactor are connected in series;
each of the plurality of full-bridge energy self-balancing sub-modules is an optimized MMC sub-module, each of the plurality of half-bridge energy self-balancing sub-modules is an optimized MMC sub-module, and the optimized MMC sub-modules each comprise an energy self-balancing circuit; and
the energy self-balancing circuit comprises a power electronic switch and a discharge resistor connected in series, and is configured to dissipate surplus energy in response to a fault in a direct-current power transmission system causing an overvoltage risk of a capacitor of the optimized MMC sub-module.

2. The energy self-balancing flexible direct-current converter valve according to claim 1, wherein two terminals of the energy self-balancing circuit are connected to a positive electrode and a negative electrode of the capacitor of the optimized MMC sub-module, respectively, and the optimized MMC sub-module is the full-bridge energy self-balancing sub-module or the half-bridge energy self-balancing sub-module.

3. The energy self-balancing flexible direct-current converter valve according to claim 1, wherein
a terminal of the upper bridge arm is connected to a positive electrode of a direct-current side of the converter valve, and another terminal of the upper bridge arm is connected to an alternating-current side of the converter valve; and
a terminal of the lower bridge arm is connected to a negative electrode of the direct-current side of the converter valve, and another terminal of the lower bridge arm is connected to the alternating-current side of the converter valve.

4. A control method for an energy self-balancing flexible direct-current converter valve, applied to the flexible direct-current converter valve according to any one of claims 1 to 3, comprising:
monitoring, in a real time manner, a voltage of the capacitor in the optimized MMC sub-module;
turning on the power electronic switch in the energy self-balancing circuit to dissipate surplus energy, in response to the voltage of the capacitor being higher than a turn-on threshold;
turning off the power electronic switch in the energy self-balancing circuit to terminate dissipating the surplus energy, in response to the voltage of the capacitor being lower than a turn-off threshold;
triggering an alternating-current energy-consuming apparatus at a sending end of the direct-current power transmission system to assist in energy consumption, in response to a total energy dissipated by the discharge resistor of the energy self-balancing circuit being greater than a discharge threshold of the discharge resistor; and
turning off the power electronic switch in the energy self-balancing circuit to terminate dissipating the surplus energy, and prohibiting turn-on of the power electronic switch until a temperature of the discharge resistor equilibrates with an ambient temperature, in response to the total energy dissipated by the discharge resistor of the energy self-balancing circuit being greater than a maximum tolerated energy of the discharge resistor.

5. The control method for the energy self-balancing flexible direct-current converter valve according to claim 4, wherein the turn-on threshold is expressed by: ${U}_{turn - on} = \left(1-k\right) ⋅ {U}_{cut} ,$ wherein U*ₜᵤᵣₙ₋ₒₙ* represents the turn-on threshold, *k* represents a first margin with a typical value range of 10% to 20%, and U*_{cut}* represents a sub-module lockout voltage.

6. The control method for the energy self-balancing flexible direct-current converter valve according to claim 5, wherein the turn-off threshold is expressed by: ${U}_{turn - off} = \left(1-m\right) ⋅ {U}_{turn - on} ,$ wherein *U_{turn-off}* represents the turn-off threshold, and *m* represents a second margin with a typical value range of 5% to 10%.

7. The control method for the energy self-balancing flexible direct-current converter valve according to claim 6, wherein the total energy dissipated by the discharge resistor is less than or equal to the maximum tolerated energy of the discharge resistor, and the maximum tolerated energy of the discharge resistor is expressed by: $\frac{{\left[\left({U}_{turn - on}+{U}_{turn - off}\right)/2\right]}^{2}}{R} ⋅ n ⋅ ΔT \leq {E}_{R} ,$ wherein R represents a resistance value of the discharge resistor, *E_{R}* represents the maximum tolerated energy of the discharge resistor, ΔT represents a duration of a single alternating-current fault, and *n* represents a turn-on duty cycle of the discharge resistor.

8. The control method for the energy self-balancing flexible direct-current converter valve according to claim 7, wherein the discharge threshold of the discharge resistor is expressed by: ${E}_{dischch ar ge - thrshold} \leq {E}_{R} - \frac{{\left[\left({U}_{turn - on}+{U}_{turn - off}\right)/2\right]}^{2}}{R} ⋅ n ⋅ \left({t}_{1}+{t}_{2}\right) ,$ wherein *E_{dischcharge-thrshold}* represents the discharge threshold of the discharge resistor, *t*₁ represents a communication duration from the sending end to a receiving end of the direct-current power transmission system, and *t*₂ represents an enabling delay of the alternating-current energy-consuming apparatus at the sending end.

9. A direct-current system, comprising: a renewable energy field station, a flexible direct-current converter station at a sending end, a flexible direct-current converter station at a receiving end, and an alternating-current energy-consuming apparatus, wherein
each of the flexible direct-current converter station at the sending end and the flexible direct-current converter station at the receiving end is provided with the energy self-balancing flexible direct-current converter valve according to any one of claims 1 to 3;
the renewable energy field station is connected to the flexible direct-current converter station at the sending end via a three-phase alternating-current bus;
the flexible direct-current converter station at the sending end is connected to the flexible direct-current converter station at the receiving end through a direct-current line; and
the alternating-current energy-consuming apparatus is connected between the renewable energy field station and the flexible direct-current converter station at the sending end, and configured to assist in surplus energy consumption in response to a total energy dissipated by the discharge resistor in the energy self-balancing flexible discharge resistor converter valve being greater than a discharge threshold of the discharge resistor.
